# EUROPEAN PATENT APPLICATION

(11) **EP 4 628 927 A1**
(43) Date of publication of application: **08.10.2025**
(21) Application number: 25165888.6
(22) Date of filing: 25.03.2025
(51) Int. Cl.: G01S 7/481, G01S 17/931

(54) **LIDAR AND MOVABLE DEVICE**

(30) Priority: 03.04.2024 CN 202410407316
(71) Applicant: Suteng Innovation Technology Co., Ltd, Shenzhen City Guangdong 518000 (CN)
(72) Inventor: JIANG, Peng, Shenzhen City (CN); LIU, Wenzhao, Shenzhen City (CN); XIA, Longguang, Shenzhen City (CN)
(74) Representative: Ran, Handong

(57) **Abstract**

A LiDAR and a movable device are provided. The LiDAR includes a housing, a transmitter, a receiver, a beam splitter and a first extinction device. The beam splitter includes a light-transmitting portion and a light-reflecting portion. The first extinction device locates inside the housing and between the beam splitter and the receiver along the transmission path of echo light, and configured to block optical signals in non-primary optical path regions from being transmitted to the receiver. The first extinction device positioned between the beam splitter and the receiver can prevent stray light in the non-primary optical path regions from being received by the receiver, reducing the stray light's impacts on the detection results and improving the detection accuracy. Since echo light energy in non-primary optical path regions accounts for a small proportion, even if the receiver does not receive this light energy, it will hardly affect the LiDAR's detection performance.

## Description

### TECHNICAL FIELD

The present application relates to the technical field of laser detection equipment, and in particular to a LiDAR and a movable device.

### TECHNICAL BACKGROUND

LiDAR is a radar system that emits laser beams to detect the position, speed and other characteristic quantities of a target object. Its working principle is to measure relevant information of the target object, such as target distance, direction, altitude, speed, attitude, and even shape, by emitting laser signals through the transmitting module and detecting the echo signals from the target object through the receiving module.

For coaxial TOF (Time of Flight) LiDAR, since the surface transmittance of the device on the light transmission path is difficult to reach 100%, there is always a certain reflectivity, which will cause part of the light inside the LiDAR to be reflected back before it is emitted to the outside of the LiDAR and reach the detector, generating the leading light. The existence of the leading light will affect the detection results of the LiDAR.

### SUMMARY

Embodiments of the present application provide a LiDAR and a movable device, which are configured to address the problem in the related art that the presence of the leading light affects the detection results of the LiDAR.

In a first aspect, the embodiment of the present application provides a LiDAR, comprising: a housing, a transmitter, a receiver, a beam splitter and a first extinction device, wherein the transmitter is located in the housing, and the transmitter is configured to emit emission light. The receiver is located in the housing, and the receiver is configured to receive the echo light. The beam splitter is located in the housing, and the beam splitter comprises a light-transmitting portion and a light-reflecting portion connected to the light-transmitting portion, the light-transmitting portion is configured to receive the emission light emitted by the transmitter, and transmit the emission light to the target object outside the housing; the light-reflecting portion is configured to receive the echo light reflected by the target object outside the housing, and transmit the echo light to the receiver. The first extinction device is located in the housing, along the transmission path of the echo light, the first extinction device is located between the beam splitter and the receiver, and the first extinction device is configured to block the optical signal in the non-primary optical path regions from being transmitted to the receiver; wherein, in the optical signal in the non-primary optical path regions, the energy proportion of the echo light is less than the first preset value.

In a second aspect, the embodiment of the present application provides a movable device, comprising: a device body and the above-mentioned LiDAR, wherein the device body is connected to the LiDAR.

The LiDAR and movable device of the embodiments of the present application are equipped with a first extinction device between the beam splitter and the receiver, and the first extinction device is configured to block the optical signal in the non-primary optical path regions from being transmitted to the receiver, thereby preventing the stray light in the non-primary optical path regions from being received by the receiver, reducing the influence of the stray light on the detection results of the LiDAR, and improving the detection accuracy of the LiDAR; and because the energy of the echo light in the non-primary optical path regions accounts for a small proportion, even if the receiver does not receive this part of the echo light energy, it will hardly affect the detection performance of the LiDAR.

### BRIEF DESCRIPTION OF DRAWINGS

In order to more clearly illustrate the embodiments of the present application or the technical solutions in the prior art, the drawings required for use in the embodiments or the description of the prior art will be briefly introduced below. Obviously, the drawings described below are only some embodiments of the present application. For ordinary technicians in this field, other drawings can be obtained based on these drawings without paying any creative work.
FIG.1 is a schematic diagram of the partial structure of a LiDAR provided by the first embodiment of the present application;
FIG. 2 is an exemplary structural diagram of the leading light in the LiDAR shown in FIG.1;
FIG.3 is another exemplary structural diagram of the leading light in the LiDAR shown in FIG.1;
FIG.4 is a schematic diagram of the partial structure of the LiDAR provided by the second embodiment of the present application;
FIG.5 is an exemplary structural diagram of the first extinction device in the LiDAR provided by the third embodiment of the present application;
FIG.6 is another exemplary structural diagram of the first extinction device in the LiDAR provided by the fourth embodiment of the present application;
FIG.7 is a schematic diagram of the partial structure of the LiDAR provided by the fifth embodiment of the present application;
FIG.8 is a schematic diagram of the partial structure of the LiDAR provided by the fifth embodiment of the present application;
FIG.9 is a schematic diagram of the partial structure of the LiDAR provided in the seventh embodiment of the present application;
FIG.10 is a schematic diagram of the partial structure of the LiDAR provided in the eighth embodiment of the present application;
FIG.11 is a schematic diagram of the partial structure of the LiDAR provided in the ninth embodiment of the present application;
FIG.12 is a schematic diagram of the partial structure of the LiDAR provided in the tenth embodiment of the present application;
FIG.13 is a schematic diagram of the partial structure of the LiDAR provided in the eleventh embodiment of the present application;
FIG.14 is an exemplary schematic diagram of the structure of the leading light in the LiDAR shown in FIG.13;
FIG.15 is a schematic diagram of the structure of the movable device provided in the embodiment of the present application.

### Reference signs:

1: LiDAR;
2: Movable Device;
3: Device Body;
10: Housing;
11: Aperture;
20: Transmitter;
30: Receiver;
40: Beam Splitter; 41: Light-transmitting Portion;42: Light-reflecting Portion;
50: First Extinction Device; 51: First Extinction Portion;52: Light-passing Portion;53: Second Extinction Portion;
60: Receiver Lens Group; 61: Receiver Lens;
70: Transceiver Module;71: Optical Scanner; 72: Transceiver Lens;
80: Window Pane;
90: Second Extinction Device; 91: First Extinction Plate; 92: Second Extinction Plate;
101: Extinction Teeth.

### DETAILED DESCRIPTION

In order to make the objectives, technical solutions and advantages of the present application more clear, the embodiments of the present application will be further described in detail below with reference to the accompanying drawings.

When the following description refers to the drawings, unless otherwise indicated, the same numbers in different drawings represent the same or similar elements. The embodiments described in the following exemplary embodiments do not represent all embodiments consistent with the present application. Instead, they are only examples of devices and methods consistent with some aspects of the present application as detailed in the attached claims.

The embodiment of the present application provides a LiDAR, wherein the LiDAR may be a TOF LiDAR, which detects characteristics such as the distance of a target object based on the time (flight time) that measuring light travels between the LiDAR and the target object.

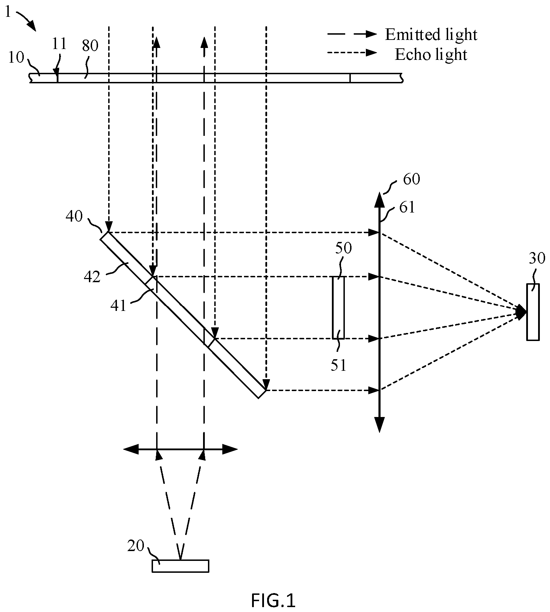

Please refer to FIG.1, the LiDAR 1 includes a housing 10, a transmitter 20, a receiver 30, a beam splitter 40 and a first extinction device 50. The transmitter 20, the receiver 30, the beam splitter 40 and the first extinction device 50 are all located in the housing 10, wherein the transmitter 20 is configured to emit emission light, the receiver 30 is configured to receive echo light, the beam splitter 40 includes a light-transmitting portion 41 and a light-reflecting portion 42 connected to the light-transmitting portion 41, the light-transmitting portion 41 is configured to receive the emission light emitted by the transmitter 20 and transmit the emission light to the target object outside the housing 10; the light-reflecting portion 42 is configured to receive the echo light reflected by the target object outside the housing 10, and transmit the echo light to the receiver 30. Along the transmission path of the echo light, the first extinction device 50 is located between the beam splitter 40 and the receiver 30, and the first extinction device 50 is configured to block the optical signal in the non-primary optical path regions from being transmitted to the receiver 30. In the optical signal in the non-primary optical path regions, the energy proportion of the echo light is less than the first preset value. It should be noted that the first preset value can be selected according to actual needs; for example, the first preset value can be 6%, 8%, 10%, 12%, 14%, etc., without limitation.

The above-mentioned first extinction device 50 is set between the beam splitter 40 and the receiver 30, and the first extinction device 50 is configured to block the optical signal in the non-primary optical path regions from being transmitted to the receiver 30, so as to prevent the stray light (such as the leading light) in the non-primary optical path regions from being received by the receiver 30, thereby reducing the influence of the stray light on the detection result of the LiDAR 1 and improving the detection accuracy of the LiDAR 1; and because the energy of the echo light in the non-primary optical path regions accounts for a small proportion, even if the receiver 30 does not receive this part of the echo light energy, it will hardly affect the detection performance of the LiDAR 1.

It is understandable that when determining the specific installation position of the first extinction device 50, it is necessary to first determine the non-primary optical path regions between the beam splitter 40 and the receiver 30. The non-primary optical path regions between the beam splitter 40 and the receiver 30 can be obtained by fitting the light path through a simulation system. Specifically, the optical path between the beam splitter 40 and the receiver 30 can be fitted through the simulation system, and the energy proportion of the echo light at each region in the optical path between the beam splitter 40 and the receiver 30 can be obtained, and the primary optical path regions and non-primary optical path regions can be divided according to the energy proportion of the echo light. In the optical signal in the primary optical path regions, the energy proportion of the echo light is greater than or equal to a second preset value. The second preset value can be selected according to actual needs; for example, the second preset value can be 86%, 88%, 90%, 92%, 94%, etc., without limitation.

The first extinction device 50 can be configured only to block the optical signal in the non-primary optical path regions from being transmitted to the receiver 30. The first extinction device 50 can also be configured to block the optical signal in the non-primary optical path regions from being transmitted to the receiver 30, and to block the optical signal in the primary optical path regions close to the edge of the non-primary optical path regions from being transmitted to the receiver 30, so as to obtain a better effect of eliminating optical crosstalk.

It should be noted that if the first extinction device 50 is also configured to block the optical signal of the edge primary optical path regions from being transmitted to the receiver 30, the region ratio of the edge primary optical path regions in the primary optical path regions can be less than or equal to a third preset value, so as to better eliminate the effect of optical crosstalk while ensuring that the echo light energy received by the LiDAR 1 is sufficient. The third preset value can be selected according to actual needs; for example, the third preset value can be 26%, 28%, 30%, 32%, 34%, etc., which is not limited.

Furthermore, the first extinction portion 51 is configured to block the optical signal transmitted to the receiver 30 through the light-transmitting portion 41. Since the optical signal transmitted to the receiver 30 by the light-transmitting portion 41 does not belong to the echo light, the first extinction portion 51 is designed to block the optical signal transmitted to the receiver 30 through the light-transmitting portion 41, so as to eliminate the crosstalk of the optical signal transmitted to the receiver 30 by the light-transmitting portion 41 to the echo light. The optical signal transmitted to the receiver 30 through the light-transmitting portion 41 may be located in the non-primary optical path regions.

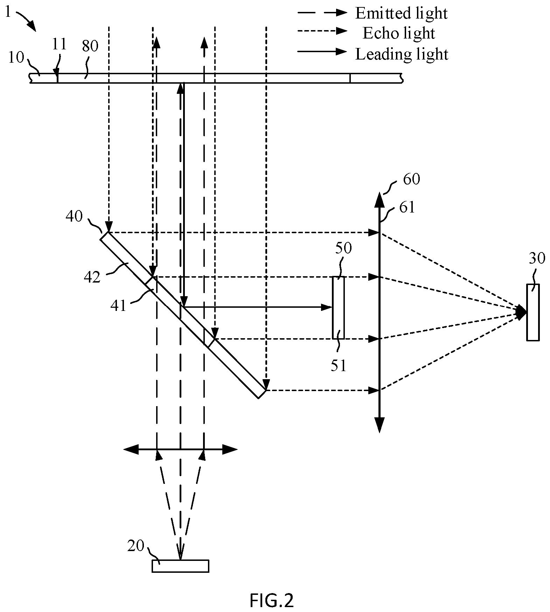

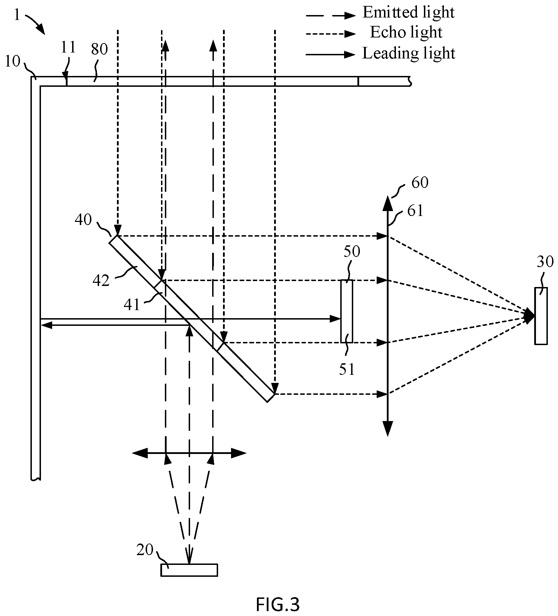

It should be noted that in the actual manufacturing process, it is difficult for the light-transmitting components (such as the light-transmitting portion 41 of the beam splitter 40, the window pane 80, and the transceiver module 70) to achieve a 100% light transmittance, and there will always be a certain reflectivity, which will cause the emission light to reach the receiver 30 after a certain transmission inside the housing 10 without emitting from the housing 10, that is, the leading light is generated, and the leading light will cause crosstalk to the echo light received by the receiver 30. The leading light is mainly transmitted inside the housing 10, and the transmission time is similar to the detection time of the close-range target object, which is easy to affect the detection accuracy of the close-range target object and cause a detection blind spot for the close-range target object. Specifically, the reasons for the generation of the leading light include: first, referring to FIG. 2, part of the emission light emitted by the light-transmitting portion 41 is reflected by the light-transmitting components (such as the window pane 80, the transceiver module 70) on the transmission path, and returns to the light-transmitting portion 41 before it is emitted from the housing 10 to reach the target object, and is at least partially reflected by the light-transmitting portion 41 toward the receiver 30; second, referring to FIG. 3, part of the emission light emitted by the transmitter 20 is not transmitted through the light-transmitting portion 41 but is reflected by the light-transmitting portion 41, and is reflected back to the light-transmitting portion 41 again by the components on the reflection path (such as the housing 10), and then is transmitted through the light-transmitting portion 41 toward the receiver 30. That is, at least part of the leading light will be emitted to the receiver 30 through the light-transmitting portion 41. Based on this, referring to FIGs. 2 and 3, the above design includes a first extinction device 50, which comprises a first extinction portion 51. The first extinction portion 51 is used to block optical signals transmitted through the light-transmitting portion 41 to the receiver 30, thereby eliminating the influence of at least part of the stray light. This enhances the detection accuracy of the LiDAR 1 for close-range target objects and improves the detection field of view of the LiDAR 1.

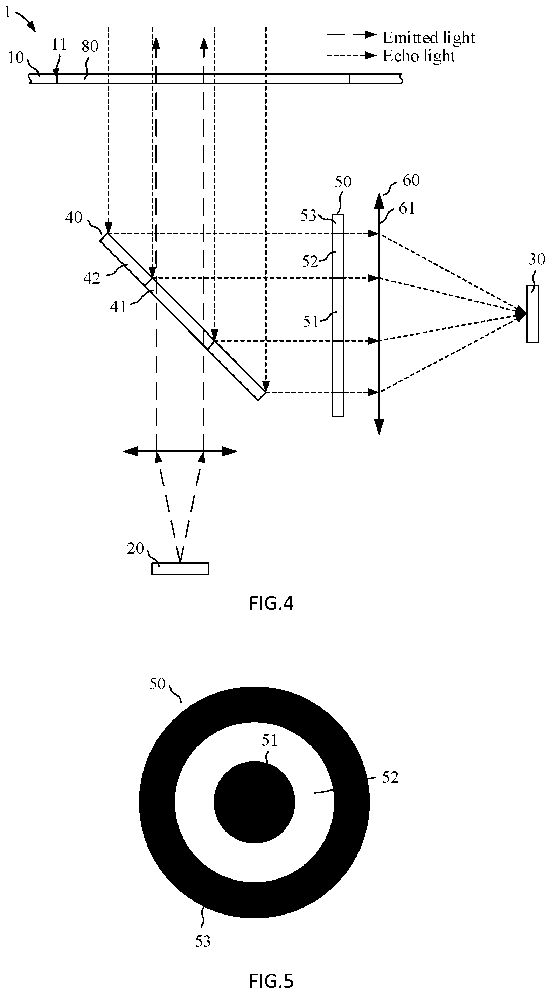

In an exemplary embodiment, the first extinction device 50 may include only the first extinction portion 51. In another exemplary embodiment, referring to FIG. 4 and FIG. 5, the first extinction device 50 includes, in addition to the first extinction portion 51, a second extinction portion 53. Specifically, the light-reflecting portion 42 is disposed around the periphery of the light-transmitting portion 41, the second extinction portion 53 is disposed around the periphery of the first extinction portion 51, and a light-passing portion 52 is formed between the second extinction portion 53 and the first extinction portion 51, and the light-passing portion 52 is configured to pass the optical signal transmitted to the receiver 30 through the light-reflecting portion 42. The second extinction portion 53 may be configured to block the light of a large angle from being transmitted to the receiver 30. The light of a large angle may be located in a non-primary optical path regions, and the optical signal transmitted to the receiver 30 through the light-reflecting portion 42 may be located in primary optical path regions.

The above-mentioned first extinction portion 51 can be roughly circular, square, runway-shaped, etc., without limitation. The second extinction portion 53 can be roughly circular, square, runway-shaped, etc., without limitation. In the actual design process, the shapes of the first extinction portion 51 and the second extinction portion 53 can be determined by the shape of the non-primary optical path regions.

The light-passing portion 52 can be roughly circular, square, runway-shaped, etc., without limitation. In the actual design process, the shape of the light-passing portion 52 may be determined by the shape of the primary optical path regions. The light-passing portion 52 may be a light-through hole, or a structure made of a light-transmitting material, without limitation.

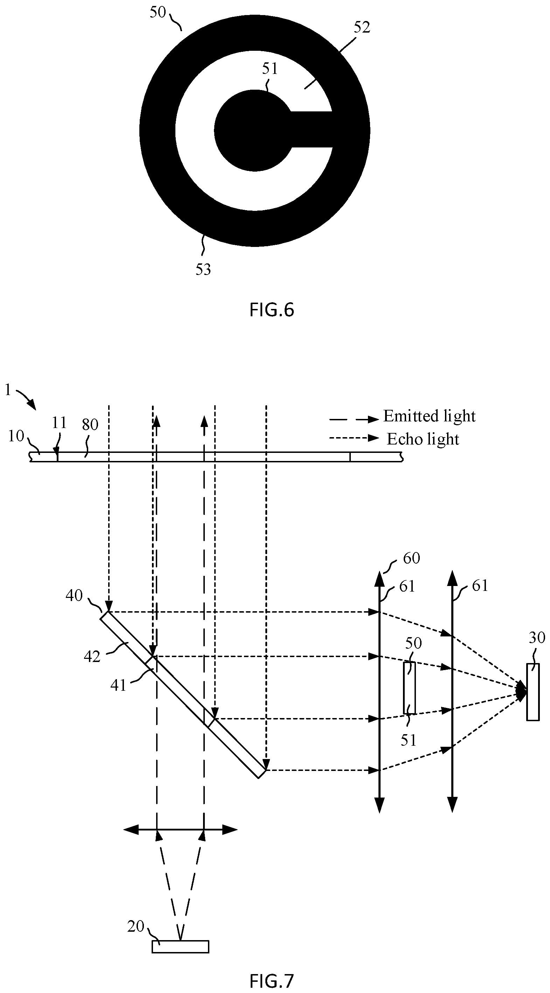

It should be noted that, referring to FIG. 5, the first extinction portion 51 and the second extinction portion 53 may be separated from each other. Referring to FIG. 6, the first light extinction portion 51 and the second extinction portion 53 may also be partially connected, which is not limited thereto.

The first extinction portion 51 and the second extinction portion 53 may be made of a material having a reflectivity less than or equal to a fourth preset value. The fourth preset value may be selected according to actual needs; for example, the fourth preset value may be 1%, 3%, 5%, 7%, 9%, etc., which is not limited thereto.

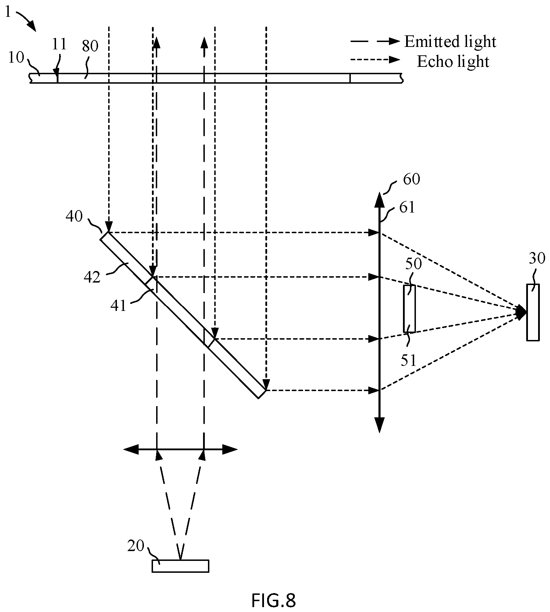

The first extinction device 50 can be arranged at any position between the beam splitter 40 and the receiver 30. For example, the LiDAR 1 also includes a receiver lens group 60, which includes at least one receiver lens 61. The receiver lens group 60 is located in the housing 10, and along the transmission path of the echo light, the receiver lens group 60 is located between the beam splitter 40 and the receiver 30. In an exemplary solution, referring to FIGs. 1 to 4, along the transmission path of the echo light, a first extinction device 50 is arranged between the beam splitter 40 and the receiver lens group 60. In another exemplary solution, referring to FIG. 7, the receiver lens group 60 includes a plurality of receiver lenses 61 arranged at intervals, and along the transmission path of the echo light, a first extinction device 50 is arranged between two adjacent receiver lenses 61. In another exemplary solution, referring to FIG. 8, along the transmission path of the echo light, a first extinction device 50 is arranged between the receiver lens group 60 and the receiver 30. Of course, at least two of the above three situations can also be selected to exist at the same time. In this case, the number of the first extinction device 50 is multiple, and the embodiment of the present application does not limit this. It should be noted that if the LiDAR 1 includes multiple first extinction devices 50, all of the first extinction devices 50 can include the first extinction portion 51 and the second extinction portion 53; or all of the first extinction devices 50 can include the first extinction portion 51 but not the second extinction portion 53; or some of the first extinction devices 50 can include the first extinction portion 51 and the second extinction portion 53, and the remaining first extinction devices 50 can include the first extinction portion 51 but not the second extinction portion 53, and this is not limited.

If a first extinction device 50 is provided between the beam splitter 40 and the receiver lens group 60 along the transmission path of the echo light, the first extinction device 50 can be designed with fewer factors to be considered, the allowed design tolerance can be larger, and the design requirements are lower, which is conducive to reducing the manufacturing cost of the LiDAR 1. For example, along the transmission path of the echo light, the first extinction device 50 between the beam splitter 40 and the receiver lens group 60 can be designed according to the caliber of the beam splitter 40 and the divergence angle of the echo light. If the first extinction device 50 is provided between two adjacent receiver lenses 61 and/or the first extinction device 50 is provided between the receiver lens group 60 and the receiver 30, the first extinction portion 51 of the first extinction device 50 needs to be designed according to the caliber of the beam splitter 40, the divergence angle of the echo light and the focal length of the receiver lens 61, and the focal length of the receiver lens 61 needs to be considered, the allowed design tolerance is smaller, and the design requirements will be higher. Based on this, during actual production and manufacturing, the position of the first extinction device 50 can be selected in combination with actual needs to meet at least one of the above three situations.

Referring to FIG. 7 and FIG. 8, the first extinction device 50 may include a light extinction sheet, and the light extinction sheet is spaced apart from the receiver lens group 60 along the transmission path of the echo light. Since the light extinction sheet does not need to be attached to the receiver lens 61, the size of the light extinction sheet does not need to be matched with the receiving surface and/or the emitting surface of the receiver lens 61, and the design can be more flexible. Wherein, the receiving surface of the receiver lens 61 is configured to receive the echo light, and the emitting surface of the receiver lens 61 is configured to emit the echo light.

Specifically, if a first extinction device 50 is provided between the beam splitter 40 and the receiver lens group 60 along the transmission path of the echo light, then the first extinction device 50 is provided between: a receiving surface of the receiver lens group 60 closest to the beam splitter 40 and the beam splitter 40. If a first extinction device 50 is provided between two adjacent receiver lenses 61 along the transmission path of the echo light, then the first extinction device 50 is provided between: an emitting surface of a receiver lens 61 close to the beam splitter 40 and a receiving surface of a receiver lens 61 far from the beam splitter 40 among the two adjacent receiver lenses 61. If a first extinction device 50 is provided between the receiver lens group 60 and the receiver 30 along the transmission path of the echo light, then the first extinction device 50 is provided between: an emitting surface of the receiver lens group 60 closest to the receiver 30 and the receiver 30.

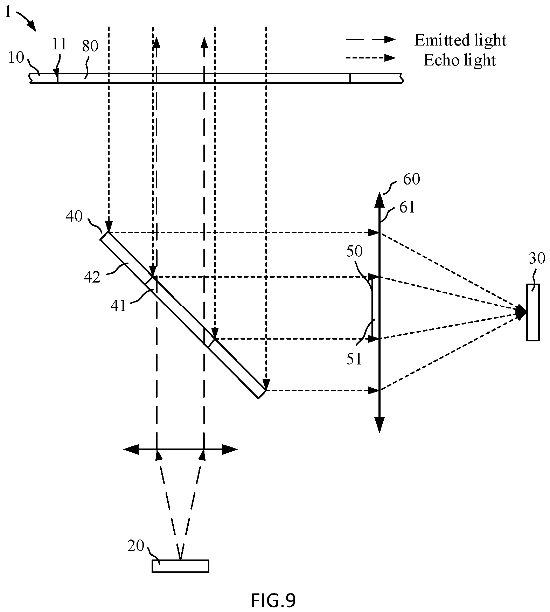

Referring to FIG.9, the first extinction device 50 may include a extinction layer, and the extinction layer is attached to the receiver lens 61, that is, the first extinction device 50 is directly arranged on the receiving surface and/or the emitting surface of the receiver lens 61, which is conducive to reducing the size of the LiDAR 1 and reducing the manufacturing cost of the LiDAR 1. The extinction layer may be attached to the receiver lens 61 by plating or coating, which is not limited.

Specifically, if a first extinction device 50 is provided between the beam splitter 40 and the receiver lens group 60 along the transmission path of the echo light, then the first extinction device 50 is attached to: a receiving surface of the receiver lens group 60 that is closest to the beam splitter 40. If a first extinction device 50 is provided between two adjacent receiver lenses 61 along the transmission path of the echo light, then the first extinction device 50 is attached to: an emitting surface of a receiver lens 61 of the two adjacent receiver lenses 61 that is close to the beam splitter 40, or a receiving surface of a receiver lens 61 of the two adjacent receiver lenses 61 that is far from the beam splitter 40. If a first extinction device 50 is provided between the receiver lens group 60 and the receiver 30 along the transmission path of the echo light, then the first extinction device 50 is attached to: an emitting surface of the receiver lens group 60 that is closest to the receiver 30.

It should be noted that if the LiDAR 1 includes multiple first extinction devices 50, all of the first extinction devices 50 can use light extinction sheets, or all of the first extinction devices 50 can use extinction layers, or some of the first extinction devices 50 can use light extinction sheets and the remaining first extinction devices 50 can use extinction layers, and there is no limitation on this.

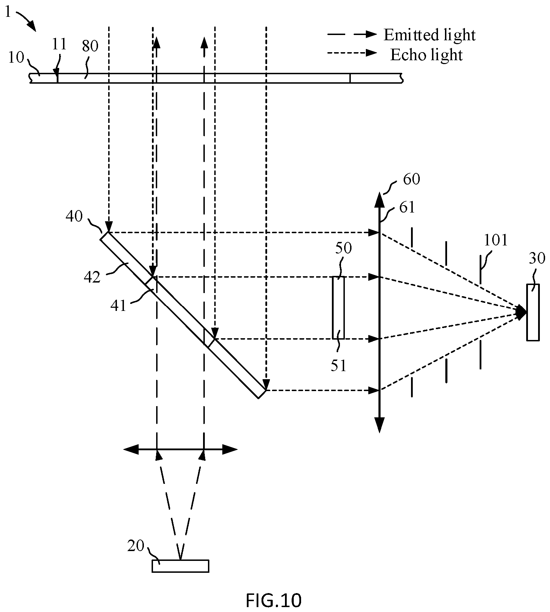

In the present embodiment of the application, referring to FIG. 10, a first extinction device 50 is provided between the beam splitter 40 and the receiver lens group 60 along the transmission path of the echo light, and extinction teeth 101 are provided in the non-primary optical path regions between the receiver lens group 60 and the receiver 30 along the transmission path of the echo light. The first extinction device 50 may include a first extinction portion 51, or may include a first extinction portion 51 and a second extinction portion 53. The extinction teeth 101 can be made of materials with reflectivity less than or equal to a fifth preset value. Wherein, the fifth preset value can be selected according to actual needs. For example, the fifth preset value can be 1%, 3%, 5%, 7%, 9%, etc., without limitation.

Referring to FIGs. 7 to 10, the LiDAR 1 may include a window pane 80. An aperture 11 is provided on the housing 10. The window pane 80 covers the aperture 11 and is connected to the housing 10. The window pane 80 is configured to receive the emission light output by the beam splitter 40 and emit the emission light to the target object outside the housing 10; the window pane 80 is also configured to receive the echo light reflected back by the target object outside the housing 10, and emit the echo light to the beam splitter 40.

It is difficult for the window pane 80 to reach a transmittance of 100%, and there will always be a certain reflectivity. In this way, the emission light will not be emitted from the housing 10 but will be reflected by the window pane 80, reach the beam splitter 40 and further transmitted to the receiver 30 through the beam splitter 40, generating a leading light, wherein the leading light is mainly distributed in the non-primary optical path regions. The above-mentioned designed first extinction device 50 can eliminate the leading light.

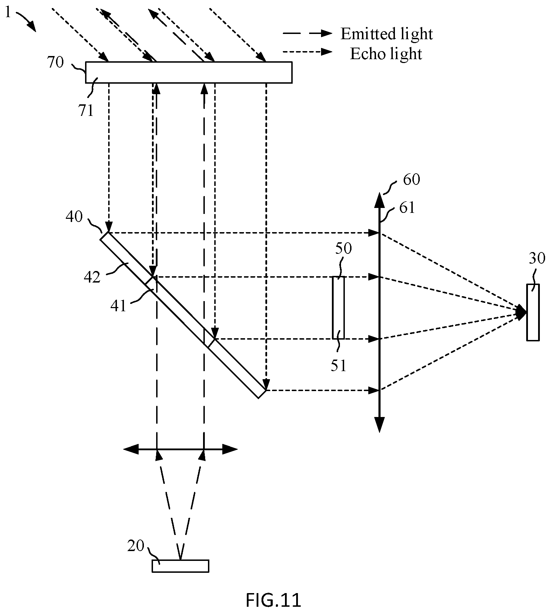

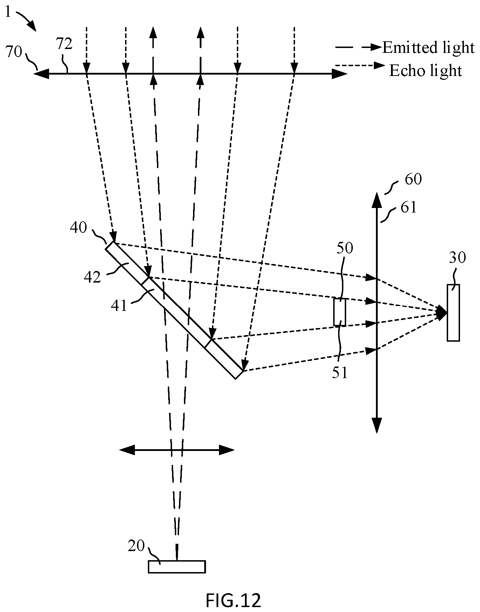

Referring to FIG. 11 and FIG. 12, the LiDAR 1 may further include a transceiver module 70, which is located in the housing 10. The transceiver module 70 is configured to receive the emission light output by the beam splitter 40 and transmit the emission light to the target object outside the housing 10; the transceiver module 70 is also configured to receive the echo light reflected by the target object outside the housing 10 and transmit the echo light to the beam splitter 40. The transceiver module 70 may include an optical scanner 71 and/or a transceiver lens 72. The optical scanner 71 may rotate to change the output direction of the emission light and may receive echo light input from multiple directions, which is beneficial to increase the emission field of view and the receiving field of view of the LiDAR 1. The optical scanner 71 may be one or more of a rotating mirror, and a prism, which is not limited thereto. The transceiver lens 72 may be configured to collimate the emission light, and the transceiver lens 72 may also be configured to converge the echo light, so as to facilitate the transmission of the echo light at a large angle to the beam splitter 40. The transceiver module 70 may include one transceiver lens 72 or a plurality of transceiver lenses 72, which is not limited thereto.

It is difficult for the transceiver module 70 (for example, the optical scanner 71, the transceiver lens 72) to achieve a transmittance of 100%, and there will always be a certain reflectivity. This will cause the emission light to not be emitted from the housing 10 but to be reflected by the transceiver module 70 inside the housing 10, reach the beam splitter 40 and be further transmitted to the receiver 30 through the beam splitter 40, thereby generating a leading light, wherein the leading light is mainly distributed in the non-primary optical path regions. The above-mentioned first extinction device 50 can eliminate the leading light.

It should be noted that the LiDAR 1 of the embodiment of the present application may include the above-mentioned transceiver module 70 and window pane 80 at the same time, or may only include the transceiver module 70 in the transceiver module 70 and the window pane 80, or may only include the transceiver module 70 and the window pane 80, and there is no limitation on this.

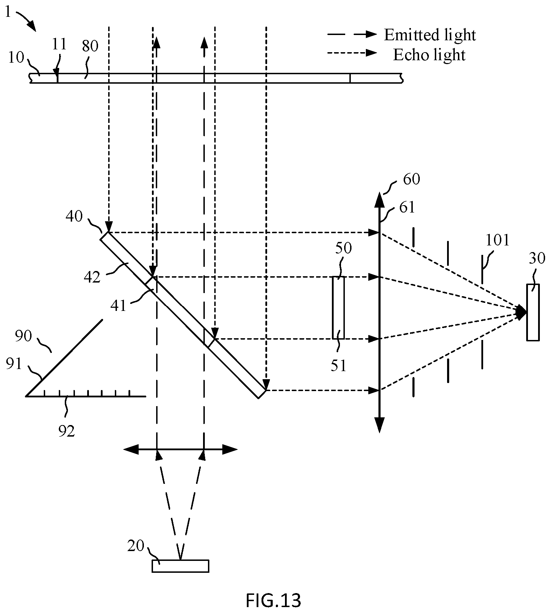

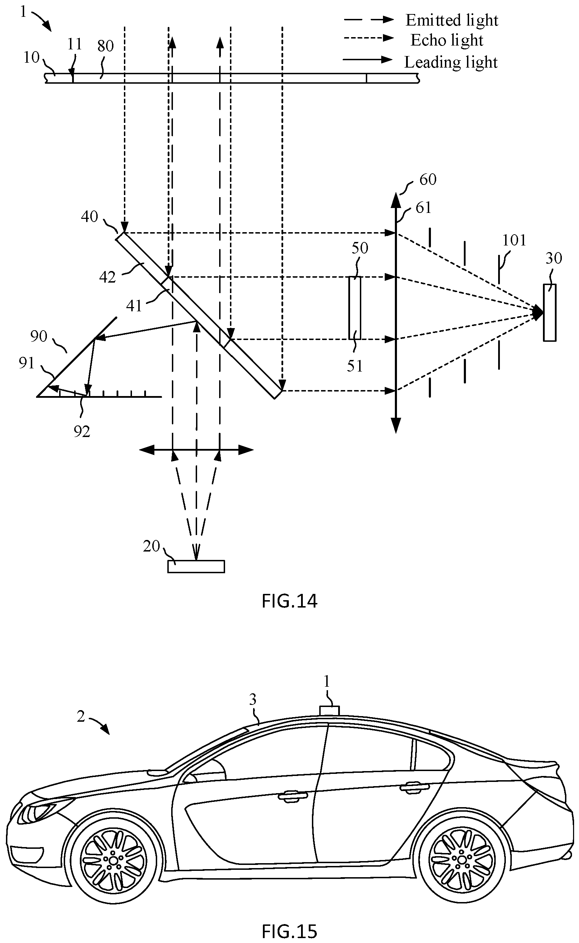

Referring to FIG. 13 and FIG. 14, the LiDAR 1 further includes a second extinction device 90, and the second extinction device 90 and the receiver 30 are respectively located on opposite sides of the beam splitter 40. The second extinction device 90 can eliminate the optical signal reaching the side of the beam splitter 40 away from the receiver 30, and prevent the optical signal from being transmitted to the receiver 30 through the beam splitter 40. Combined with the above records, since it is difficult for the light-transmitting portion 41 to achieve a 100% transmittance, part of the emission light emitted by the transmitter 20 is not transmitted through the light-transmitting portion 41 but is reflected by the light-transmitting portion 41, and is reflected back to the light-transmitting portion 41 again through the device on the reflection path (such as the housing 10), and then transmitted toward the receiver 30 through the light-transmitting portion 41 to generate a leading light. The second extinction device 90 can be set to eliminate the part of the front light before it is transmitted toward the receiver 30 through the beam splitter 40.

The second extinction device 90 can be any extinction device. For example, the second extinction device 90 can include a first extinction plate 91 and a second extinction plate 92, both of which are arranged at an angle with the beam splitter 40, and the end of the first extinction plate 91 away from the beam splitter 40 is connected to the end of the second extinction plate 92 away from the beam splitter 40, and the first extinction plate 91 and the second extinction plate 92 are arranged at an angle, and the opening angle of the first extinction plate 91 and the second extinction plate 92 is toward the beam splitter 40. In this way, the optical signal emitted toward the second extinction device 90 through the beam splitter 40 can be received by the first extinction plate 91 and/or the second extinction plate 92, and eliminated by the first extinction plate 91 and the second extinction plate 92.

The above-mentioned design of the first extinction plate 91 and the second extinction plate 92 being arranged at an angle can make it possible for the optical signal received through the first extinction plate 91 to be absorbed and eliminated at least partially through the first extinction plate 91, and the remaining part can be reflected to the second extinction plate 92 and absorbed and eliminated again through the second extinction plate 92, or, after the optical signal received through the second extinction plate 92 is absorbed and eliminated at least partially through the second extinction plate 92, the remaining part can be reflected to the first extinction plate 91 and absorbed and eliminated again through the first extinction plate 91, thereby increasing the number of times the signal is absorbed and reflected, and making the signal extinction effect better. Wherein, the angle between the first extinction plate 91 and the second extinction plate 92 can be selected in combination with actual needs, for example, it can be set at an angle of 45°, 60°, 75°, 90°, etc., and there is no limitation on this. The angle between the above-mentioned first extinction plate 91/second extinction plate 92 and the beam splitter 40 can be selected in combination with actual needs, and there is no limitation on this.

The first extinction plate 91 and the second extinction plate 92 can be made of a material with a reflectivity less than or equal to a sixth preset value. The sixth preset value can be selected according to actual needs; for example, the sixth preset value can be 1%, 3%, 5%, 7%, 9%, etc., which is not limited. At least one of the first extinction plate 91 and the second extinction plate 92 can also be provided with extinction teeth to improve the extinction effect.

A light-collecting side of the receiver 30 can be provided with a extinction frame, and a light-through hole is provided on the extinction frame, so that the optical signal in the non-primary optical path regions can be blocked by the extinction frame, and the optical signal in the primary optical path regions can be received by the receiver 30 through the light-through hole.

In a second aspect, referring to FIG. 15, the embodiment of the present application further provides a movable device 2, which includes a device body 3 and the above-mentioned LiDAR 1, and the device body 3 is connected to the LiDAR 1. In the embodiment of the present application, the movable device 2 is a vehicle; of course, in other embodiments of the present application, the movable device 2 can also be any mobile tool equipped with the above-mentioned LiDAR 1, such as an electric vehicle, a drone, a robot, etc.

In the description of the present application, it should be understood that the terms "first", "second", etc. are configured for descriptive purposes only and should not be understood as indicating or implying relative importance. For those of ordinary skill in the art, the specific meanings of the above terms in the present application can be understood according to the specific circumstances. In addition, in the description of the present application, unless otherwise specified, "multiple" refers to at least two, for example, two, three, four, etc. "And/or" describes the association relationship of associated objects, indicating that three relationships may exist, for example, A and/or B can represent: A exists alone, A and B exist at the same time, and B exists alone. The character "/" generally indicates that the objects associated before and after are in an "or" relationship.

The above disclosure is only the preferred embodiment of the present application, which certainly cannot be configured to limit the scope of rights of the present application. Therefore, equivalent changes made according to the claims of the present application are still within the scope covered by the present application.

## Claims

1. A LiDAR, comprising:
a housing;
a transmitter, wherein the transmitter is located in the housing, and the transmitter is configured to emit emission light;
a receiver, wherein the receiver is located in the housing, and the receiver is configured to receive echo light;
a beam splitter, wherein the beam splitter is located in the housing, and the beam splitter comprises a light-transmitting portion and a light-reflecting portion connected to the light-transmitting portion, the light-transmitting portion is configured to receive the emission light emitted by the transmitter and transmit the emission light to a target object outside the housing; and the light-reflecting portion is configured to receive the echo light reflected by the target object outside the housing and transmit the echo light to the receiver; and
a first extinction device, wherein the first extinction device is located in the housing;
along the transmission path of the echo light, the first extinction device is located between the beam splitter and the receiver; and the first extinction device is configured to block an optical signal in non-primary optical path regions from being transmitted to the receiver, wherein in the optical signal in the non-primary optical path regions, the energy proportion of the echo light is less than a first preset value.

2. The LiDAR according to claim 1, wherein the first extinction device comprises:
a first extinction portion, configured to block the optical signal transmitted to the receiver through the light-transmitting portion.

3. The LiDAR according to claim 2, wherein the first extinction device further comprises: a second extinction portion, the light-reflecting portion is arranged around the periphery of the light-transmitting portion, the second extinction portion is arranged around the periphery of the first extinction portion, and a light-passing portion is formed between the second extinction portion and the first extinction portion, and the light-passing portion is configured to allow the optical signal transmitted to the receiver through the light-reflecting portion to pass through.

4. The LiDAR according to claim 1, further comprising:
a receiver lens group, wherein the receiver lens group includes at least one receiver lens, the receiver lens group is located in the housing, and along the transmission path of the echo light, the receiver lens group is located between the beam splitter and the receiver,
wherein: along the transmission path of the echo light, the first extinction device is arranged between the beam splitter and the receiver lens group; or the receiver lens group includes a plurality of the receiver lenses, along the transmission path of the echo light, the first extinction device is arranged between two adjacent receiver lenses; and/or along the transmission path of the echo light, the first extinction device is arranged between the receiver lens group and the receiver.

5. The LiDAR according to claim 4, wherein the first extinction device further comprises: an optical extinction layer, the optical extinction layer attached to the receiver lens;
or the first extinction device includes a light extinction sheet, the light extinction sheet spaced apart from the receiver lens group along the transmission path of the echo light.

6. The LiDAR according to claim 1, further comprising:
a transceiver module, wherein the transceiver module is located in the housing; the transceiver module is configured to receive the emission light output by the beam splitter, and transmit the emission light to the target object outside the housing; and the transceiver module is further configured to receive the echo light reflected by the target object outside the housing, and transmit the echo light to the beam splitter;
wherein the transceiver module includes an optical scanner or a transceiver lens.

7. The LiDAR according to claim 1, further comprising:
a window pane, wherein an aperture is provided on the housing, the window pane covers the aperture and is connected to the housing; the window pane is configured to receive the emission light output by the beam splitter, and emit the emission light to the target object outside the housing; and the window pane is further configured to receive the echo light reflected back by the target object outside the housing, and emit the echo light to the beam splitter.

8. The LiDAR according to claim 1, further comprising:
a second extinction device, wherein the second extinction device and the receiver are respectively located on two opposite sides of the beam splitter.

9. The LiDAR according to claim 8, wherein the second extinction device further comprises:
a first extinction plate, the first extinction plate arranged at an angle with the beam splitter; and
a second extinction plate, the second extinction plate arranged at an angle with the beam splitter, wherein an end of the first extinction plate away from the beam splitter is connected to an end of the second extinction plate away from the beam splitter, the first extinction plate and the second extinction plate are arranged at an angle, and the opening angle of the first extinction plate and the second extinction plate is toward the beam splitter.

10. A movable device, comprising:
a device body and the LiDAR according to any one of claims 1 to 9, wherein the device body is connected to the LiDAR.
